# EUROPEAN PATENT SPECIFICATION

(11) **EP 1 978 535 B1**
(45) Date of publication and mention of the grant of the patent: **21.12.2011**
(21) Application number: 08380105.0
(22) Date of filing: 02.04.2008
(51) Int. Cl.: H01H 13/70, B60N 2/02

(54) **Control panel located in a vehicle door armrest**
In einer Fahrzeugtürarmlehne platzierte Steuertafel
Panneau de commande situé sur un accoudoir de portière de véhicule

(30) Priority: 03.04.2007 ES 200700875
(43) Date of publication of application: 08.10.2008
(73) Proprietor: Maier, S. Coop., 48300 Gernika (ES)
(72) Inventor: Mandaluniz Bilbao, Joseba, 48300 Gernika (ES)
(74) Representative: Urteaga Simarro, José Antonio

(56) References cited:
- US-A1- 2005 133 347
- US-A1- 2005 133 351
- US-B2- 6 657 140

## Description

### Technical field

The invention refers to a control panel located in a vehicle door armrest, which makes it possible to control the opening and closing of side windows, the locking and unlocking of doors, and/or any other item in the vehicle.

### Technical background

Vehicle door armrests are an evolution of vehicle door handles, which provided the user with a gripping area by which to grasp the door so as to be able to open it or close it from inside the vehicle passenger compartment. Nowadays armrests are relatively large in size, with the aim of providing a surface on which the passenger or the driver might rest his/her arm. Additionally, armrests can include other items such as a control panel of the kind referred to by the present invention. The control panel makes it possible to control certain remotely- and electrically-operable vehicle items from the vehicle armrest, in a manner which is very convenient for the driver or passenger user. For example, from the control panel in the armrest the user can normally open and close his/her electrically-operated side window and, optionally, other electrically-operated side windows in the vehicle. It is also often possible to lock and unlock the door on which the control panel is situated, or even to operate the central locking system to lock or unlock all the vehicle doors.

A conventional control panel usually comprises a cover, a variety of buttons, a printed circuit board (hereinafter PCB) and a PCB support. The cover is an item made of thermoplastic material whose main function is to provide an aesthetic appearance to the unit, enabling access to the buttons, which generally protrude through holes cut in the cover. The buttons are usually mechatronic mechanisms or devices (switches, etc.) which, on being operated by the user, open or close different electrical contacts on the PCB. To help using the control panel, the buttons usually have an informative icon painted or engraved on them, indicating the function linked to each button. The PCB, usually situated below the buttons, includes the necessary circuitry so that when buttons are pressed an appropriate signal is sent to an ECU (Electronic Control Unit) located in the vehicle. Finally, the PCB support is a thermoplastic component that holds the PCB in a defined position so that when a button is pressed, the corresponding contact on the PCB is appropriately opened or closed. This PCB support also often includes a housing for a connector responsible for communicating the PCB with the ECU.

The present invention seeks to provide a design for a control panel for a vehicle door armrest which offers certain advantages in relation to conventional control panels. For example, it seeks to reduce the number of components that make up the control panel. In the case of conventional control panels, a relatively high number of components are required, as has been explained: a cover, a button or independent mechantronic device for each function or icon, a PCB and a PCB support. Document US 2005/0133351 discloses a device according to the preamble of claim 1.

### Brief description of the invention

It is an object of the invention to provide a control panel located in a vehicle door armrest, which comprises a rigid external component and a printed circuit board (PCB), with the PCB being provided with a capacitive sensor capable of detecting the approach or the contact of a user's finger on the rigid external component. The rigid external component is provided with operating areas, preferably indicated by means of respective icons and preferably delimited by a certain relief. The user has to operate the operating areas with his/her finger in order to carry out a certain function in the vehicle. The external component is made in one single piece, as opposed to conventional control panels in which there are two items above the PCB (the cover and the set of buttons). Therefore, the number of components is considerably smaller in comparison to conventional control panels, thereby reducing the number of operations needed during assembly and therefore reducing the cost of the product. Additionally, the control panel offers the additional advantage that the surface of the external component, unlike the cover of conventional control panels, does not need to be provided with holes. As a consequence, the control panel is subject to a lower accumulation of dust or dirtiness in the long term. Another advantage is that, as the external component does not have buttons and can be produced as one single part, it gives considerable freedom of design as regards how the said external component can be designed and as regards the shape, size and location of the operating areas. Moreover, by eliminating the buttons, the total height of the control panel is reduced, thereby gaining free space in the armrest area.

### Brief description of the drawings

Details of the invention can be seen in the accompanying drawings, which do not seek to limit the scope of the invention:
- Figure 1 shows a breakdown of an embodiment of the control panel according to the invention.
- Figure 2 shows a schematic cross section of the above control panel.

### Detailed description of the invention

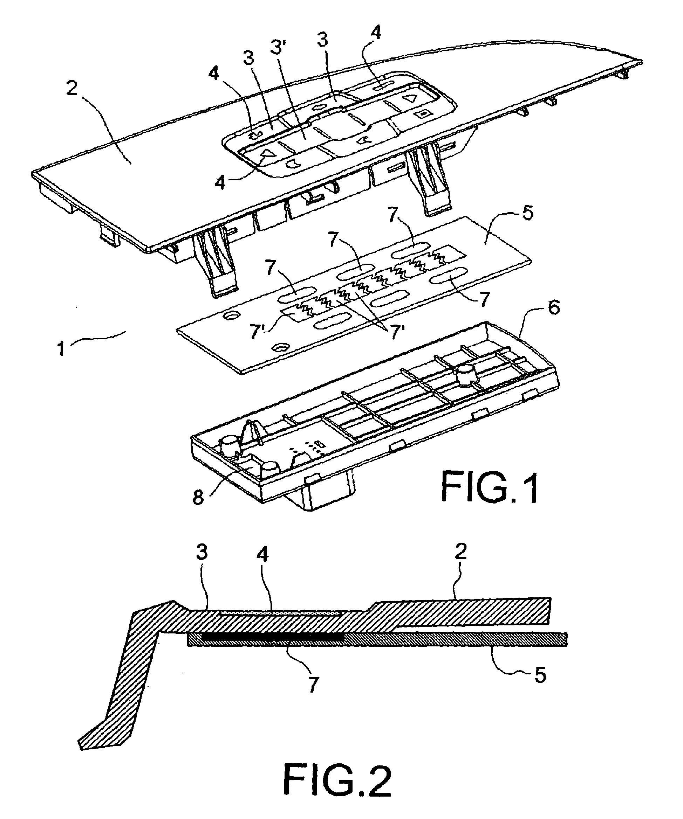

Figure 1 shows an embodiment of the control panel according to the invention, intended to be located in a vehicle door armrest. The control panel (1) according to the invention includes a rigid external component (2), that provides an aesthetic finish to the control panel (1) and that includes a set of operating areas (3) linked to a set of functions in the vehicle. For example, there might be an operating area (3) linked to locking a door, to unlocking a door, to opening a window, to closing a window, etc. Each operating area (3) is optionally provided with an icon (4) that provides the user with information about the function linked with said operating area (3). The control panel (1) also includes a printed circuit board or PCB (5), which includes a sensor to detect the presence of the user's fingers near or on the operating areas (3) of the external component (2). When the sensor detects a presence in at least one operating area (3), the PCB (5) generates a signal directed towards an ECU, so that the function selected by the user and linked to this operating area (3) is carried out.

The control panel (1) includes a microprocessor to process the detections carried out by the sensor and send them to the ECU. The existence of a microprocessor makes it possible to configure the control panel (1) so that operating sequences may be entered by means of the operating areas (3). For example, if a user touches any of the operating areas (3) for a time longer than a threshold, the control panel (1) can generate the necessary orders for all side windows to be closed simultaneously. The microprocessor may be included in the sensor itself or be located on the PCB (5).

The sensor used in the invention is a capacitive sensor, i.e. a sensor that measures the variation of the capacitance in an electrode (7) with regard to a reference. This variation takes place when an external object approaches the electrode (7). The capacitive sensor according to the invention, as can be seen in the figure, is provided with electrodes (7) linked to the respective operating areas (3). This means that each operating area (3) is linked to an electrode (7) capable of detecting an external presence in said operating area (3).

The invention contemplates two preferred embodiments as regards to when the signal is sent to the ECU once the presence of an external object is detected. In a first embodiment, the control panel (1) will send a signal to the ECU indicating that there is an external presence on an operating area (3) when the presence of an external object is detected, i.e. when the sensor detects a capacity variation in the corresponding electrode (7). A timer system greater than or equal to zero may be included, so that the signal is sent to the ECU a certain time after the capacity variation is detected. This embodiment enables the control panel to have a relatively fast response to user interaction. In a second embodiment, the control panel (1) sends the signal when the presence of the external object terminates, i.e. when the sensor stops detecting a capacity variation in the corresponding electrode (7). This second embodiment enables the user to be able to touch the control panel in search of a specific operating area without triggering any unwanted functions during this process.

As can be seen in the figure, the operating areas (3) are provided with a certain relief which, in this case, separates them. The purpose of this relief is to enable the user to be able to find these operating areas (3) by touch alone, without having to look at the control panel.

The icons (4) of the external component (2) are preferably translucent. In turn, the control panel (1) includes lighting means to illuminate the icons (4) and make them visible from the vehicle passenger compartment, taking advantage of the translucent nature of the icons (4). These lighting means are preferably located on the PCB (5).

In an example, the external component (2) is made of a coloured translucent thermoplastic material, normally Polycarbonate (PC) or Polymethylmethacrylate (PMMA) provided with a whitish colouring. The external component (2) is opaquely painted and the icons (4) are made by means of an etching process using a laser or other suitably programmed device. This embodiment enables complex icons to be etched because the laser can be programmed by means of a numerical control and can etch complex shapes with a high level of accuracy.

The external component (2) is manufactured by means of a dual material injection process, so that the icons (4) are made of a coloured translucent thermoplastic material and the rest of the external component (2) is made of an opaque thermoplastic material. This embodiment is advantageous because the external component (2) is manufactured in a single process carried out by a single machine. Consequently, this embodiment is usually relatively cost-effective and entails a shorter manufacturing time.

As can be seen in Figure 1, the embodiment of the control panel (1) also includes a PCB support (6), which is provided with a housing (8) intended to house a connector responsible for communicating the PCB (5) with the ECU.

Figure 2 shows a very schematic transversal cross section of the above control panel (1). As can be seen, the PCB (5) is located below the rigid external component (2), with the electrode (7) being located just below an operating area (3). This electrode (7) therefore enables presence detection specifically in this operating area (3). It must be emphasised that this is presence detection, i.e. it is not essential for the user to go so far as to touch the external component (2). This is due to the fact that the detection range of the electrode (7) is capable of going beyond the external component (2) made of thermoplastic material which is above the PCB.

As has been mentioned, the control panel (1) according to the invention is capable of detecting user "inputs", i.e. user actions on the operating areas (3). Preferably, the control panel (1) is capable of detecting at least one of the following "inputs":
- an external presence near an operating area (3) for a longer time than a predefined time threshold; in other words, the user touches an operating area for a relatively long time (note that the term "touch" is used for illustrative purposes only, as it is not essential to touch the external component (2));
- a consecutive presence in at least two operating areas (3) for a shorter time than a preset time threshold; in other words, the user briefly touches one operating area (3) and then, without substantially waiting, briefly touches another operating area (3);
- two consecutive presences in an operating area (3) in a shorter time than a preset time threshold; in other words, the user makes a quick, double touch on the same operating area (3);
- a presence in an operating area (3) and, a certain time after (greater than or equal to a preset time threshold), a new presence in the same operating area (3); in other words, the user briefly touches one operating area (3) and, after a relatively long time has passed, briefly touches the same operating area (3) by way of confirmation;
- a presence in an operating area (3) and, a certain time after (greater than or equal to a preset time threshold), a new presence in another operating area (3); in other words, the user briefly touches one operating area (3) and, after a relatively long time has passed, briefly touches another operating area (3) by way of confirmation.

The control panel (1) according to the invention can be used to operate different components in the vehicle. Preferably, the control panel (1) is capable of generating signals directed towards the ECU in order to carry out at least one of the following operations:
- totally or partially vary the position of the side window in the vehicle door in which the control panel (1) is located,
- totally or partially vary the position of the side window in a different vehicle door from the door in which the control panel (1) is located,
- totally or partially vary the position of all the side windows in the vehicle simultaneously,
- totally raise all the side windows in the vehicle and then slightly lower all the side windows to achieve a ventilation position,
- block or unblock the side windows in the rear doors of the vehicle,
- vary the position of the internal rear-view mirror or of the external rear-view mirrors on the vehicle,
- block or unblock all the vehicle doors by means of the central locking system,
- block or unblock the rear doors of the vehicle,
- block or unblock the hatchback of the vehicle,
- vary the position of the vehicle sunroof,
- vary the position of any seat in the vehicle,
- fold in or fold out the vehicle rear-view mirrors,
- regulate the darkening of an electrochromic internal rear-view mirror.

As can be seen in Figure 1, the invention comprises a particular type of operating area or slider (3'). The slider (3') works together with a set of consecutive electrodes (7') that allow detecting the presence of the user at different points along the slider (3'). An operating area of this type makes it possible to carry out very intuitive actions, as can be appreciated hereafter. The control panel (1) is capable of detecting an external presence consecutively on at least two points on the slider (3'), with this consecutive presence serving as an indication of a certain orientation. By "certain orientation" it is understood that if the user rubs or moves his/her finger along the slider (3'), the direction in which the user's finger is moved is understood by the control panel (1) as a direction towards which to move, e.g., a mirror. This directionality or capability to enter orientations makes the control panel (1) a very intuitive user interface for certain vehicle functions.

More specifically, a preferred embodiment of the invention is one in which a short touch on an operating area (3) is interpreted by the control panel (1) an order to completely raise or lower all the side windows, or to leave all of them in a ventilation position. This means that when the control panel (1) detects a presence in one operating area (3) for a certain time that is greater than a preset time threshold, the control panel (1) sends the appropriate signals directed towards the ECU so that it carries out the action of totally raising all the side windows of the vehicle, totally lowering the side windows of the vehicle or totally raising all the side windows and then lowering them partially so that they achieve the ventilation position.

Alternatively, it is also contemplated that a short touch be associated with the blocking or unblocking of the rear side windows, the central locking system, or the blocking or unblocking of the hatchback. This means that when the control panel (1) detects a presence in an operating area (3) for certain a time that is greater than a preset time threshold, the control panel (1) sends the appropriate signals directed towards the ECU so that it carries out the action of blocking or unblocking the side windows in the rear doors of the vehicle, blocking or unblocking the doors of the vehicle by means of the central locking system, blocking or unblocking the rear doors of the vehicle, or blocking or unblocking the hatchback of the vehicle.

In another embodiment, a long touch on an operating area (3) followed by a shifting of the finger on the slider (3') allows to regulate the position of at least one vehicle component. This means that when the control panel (1) detects a presence in an operating area (3) for a certain time that is greater than a preset time threshold, and then detects a consecutive presence on at least two points on the slider (3') indicating a certain orientation or direction, the control panel (1) then sends the appropriate signals directed towards the ECU so that it carries out the action of varying the position of the vehicle component. Specifically, the slider (3') can allow to vary the position of the side window in the door of the vehicle in which the control panel (1) is located, to vary the position of the side window in a door of the vehicle different from the one in which the control panel (1) is located, to vary the position of the internal rear-view mirror or of the external rear-view mirrors of the vehicle, to vary the position of the vehicle sunroof or to vary the position of any seat in the vehicle. As mentioned, the variation will be carried out in the direction indicated by the certain orientation.

Another embodiment of the invention is one in which rubbing on the slider, without a prior touch on another operating area, makes it possible to raise or lower the side window of the door in which the control panel is located. According to this embodiment, the slider (3') is used by default to regulate the position of the user's own window. This means that when the control panel (1) detects a consecutive presence on at least two points on the slider (3'), indicating a certain orientation, the control panel (1) generates signals directed towards the ECU so that it carries out the action of varying the position of the side window in the door of the vehicle in which the control panel (1) is located, and carrying out this variation of position in the direction indicated by the certain orientation.

In another embodiment, a consecutive touch on two operating areas (3) allows to regulate the position of a vehicle component. The first touch is used to select the function and the second to indicate the operation on this function. In this embodiment, when the control panel (1) detects a consecutive presence on at least two operating areas (3) in a certain time that is less than a preset time threshold, the control panel (1) is capable of generating signals directed towards the ECU so that it carries out the action of regulating the position of the vehicle component. Specifically, the action comprises varying the position of the side window in the vehicle door in which the control panel (1) is located, varying the position of the side window in vehicle door different from the one in which the control panel (1) is located, varying the position of the internal rear-view mirror or of the external rear-view mirrors of the vehicle, or varying the position of the vehicle sunroof.

## Claims

1. Control panel (1) adapted to be located in a vehicle door armrest, that enables a user to carry out at least one function on at least one component of the vehicle, comprising:
- a rigid external component (2), that contributes an aesthetic appearance to the control panel (1) and comprises a number of operating areas (3) linked to functions related with vehicle components,
- a printed circuit board or PCB (5), that comprises a capacitive sensor to detect the presence of the user's fingers on the operating areas (3) of the external component (2), with the capacitive sensor being provided with electrodes (7) associated to the operating areas (3), so that when the capacitive sensor detects a presence in at least one operating area (3) of the PCB (5), it generates a signal towards a control unit (ECU) so that it executes the function selected by the user and associated to said operating area (3),
**characterised in that**:
- at least one of the operating areas (3) is provided with translucent icons (4),
- and **in that** the external component (2) is made by a dual material injection process, in which the icons (4) are made of a coloured translucent thermoplastic material and the rest of the external component (2) is made of an opaque thermoplastic material.

2. Control panel (1), in accordance with claim 1, **characterised in that** the operating areas (3) are provided with relief to enable them to be found by touch.

3. Control panel (1), in accordance with claim 1, **characterised in that** the control panel (I) includes lighting means to illuminate the icons (4) and make them visible from the vehicle passenger compartment.

4. Control panel (1), in accordance with claim 3, **characterised in that** the lighting means are located on the PCB (5).

## Patentansprüche

1. Bedienfeld (1), zum Einbau in die Armlehne einer Fahrzeugtür gedacht, das dem Benutzer ermöglicht, mindestens eine Funktion für mindestens eine Fahrzeugkomponente durchzuführen, und das folgendes umfasst:
- eine steife äußere Komponente (2), die zum ästhetischen Erscheinungsbild des Bedienfelds beiträgt(1) und eine Reihe von Bedienflächen umfasst (3), welche mit Funktionen verbunden sind, die mit den Fahrzeugkomponenten zusammenhängen,
- eine Leiterplatte oder PCB (5), die einen kapazitiven Sensor umfasst, um die Anwesenheit der Finger des Benutzers auf den Bedienflächen (3) festzustellen, wobei der kapazitive Sensor mit Elektroden (6) versehen ist, die mit den Bedienflächen (3) verknüpft sind, so dass der kapazitive Sensor, wenn er die Anwesenheit eines Fingers auf mindestens einer Bedienfläche (3) des PCB (5) feststellt, ein Signal an ein elektronisches Steuergerät (ECU) erzeugt, so dass dieses die Funktion ausführt, die vom Benutzer gewählt wurde und mit besagter Bedienfläche (3) verknüpft ist,
**dadurch gekennzeichnet, dass**:
- mindestens eine der Bedienflächen (3) mit durchsichtigen Bildzeichen (4) ausgestattet ist,
- und dass die äußere Komponente (2) durch den Injektionsprozess von zwei Materialien hergestellt ist, bei dem die Bildzeichen (4) aus farbigen, durchsichtigen, thermoplastischem Material bestehen, und der Rest der äußeren Komponente (2) aus einem opaken thermoplastischen Material besteht.

2. Bedienfeld (1) gemäß Anspruch 1, **dadurch gekennzeichnet, dass** die Bedienflächen (3) mit einem Relief versehen sind, damit sie bei Berührung gefunden werden können.

3. Bedienfeld (1) gemäß Anspruch 1, **dadurch gekennzeichnet, dass** das Bedienfeld (1) Beleuchtungsmittel enthält, um die Bildzeichen(4) zu beleuchten und sie von dem Insassenraum des Fahrzeugs aus sichtbar zu machen.

4. Bedienfeld (1) gemäß Anspruch 3, **dadurch gekennzeichnet, dass** sich die Beleuchtungsmittel auf dem PCB (5) befinden.

## Revendications

1. Panneau de commande (1) adapté pour être situé dans l'accoudoir de la portière d'un véhicule, qui permet à l'utilisateur de réaliser au moins une fonction sur au moins un élément du véhicule, comprenant:
- un composant externe (2) rigide, qui donne une apparence esthétique au panneau de commande (1) et comprend plusieurs zones d'opération (3), reliées à des fonctions réalisées par des éléments du véhicule,
- une plaque de circuit imprimé ou PCB (5), qui comprend un capteur capacitif qui détecte la présence des doigts de l'utilisateur sur les zones d'operation (3) du composant externe (2), avec le capteur capacitif équipé d'électrodes (7) associées aux zones d'operation (3), de telle sorte que lorsque le capteur capacitif détecte une présence sur au moins une zone d'operation (3) de la PCB (5) il envoie un signal à une unité de contrôle (ECU) pour qu'elle exécute la fonction choisie par l'utilisateur et associée à cette zone d'operation (3),
**caractérisé par le fait que**:
- au moins l'une des zones d'operation (3) est munie d'icônes (4) translucides,
- et par que le composant externe (2) est construit par injection bi-matériau, dans laquelle les icônes (4) sont fabriquées en matériau thermoplastique translucide et le reste du composant externe (2) est construit en matériau thermoplastique opaque.

2. Panneau de commande (1) conformément à la revendication 1, **caractérisée par le fait que** les zones d'operation (3) sont munies du relief pour que l'utilisateur puisse les trouver au toucher.

3. Panneau de commande (1) conformément à la revendication 1, **caractérisé par le fait que** le panneau de commande (1) comprend des systèmes d'éclairage pour éclairer les icônes (4) et les rendre visibles dans le compartiment du passager du véhicule.

4. Panneau de commande (1) conformément à la revendication 3, **caractérisée par le fait que** les systèmes d'éclairage sont situés sur la PCB (5).
